# EUROPEAN PATENT APPLICATION

(11) **EP 4 640 545 A1**
(43) Date of publication of application: **29.10.2025**
(21) Application number: 23838230.3
(22) Date of filing: 20.12.2023
(51) Int. Cl.: B63B 21/29, B63B 21/50, B63B 22/02

(54) **ANCHORING SYSTEM AND METHODS FOR INSTALLING AND UNINSTALLING THE ANCHORING SYSTEM**

(30) Priority: 21.12.2022 ES 202231091
(71) Applicant: GAZELLE WIND POWER LIMITED, D04 TR29 Dublin (IE)
(72) Inventor: GARCÍA FERRÁNDEZ, Antonio Luis, 28224 Pozuelo de Alarcón (ES)
(74) Representative: Elzaburu S.L.P.
(86) International application number: PCT/IB2023/063018
(87) International publication number: WO 2024/134539

(57) **Abstract**

Anchoring system and installation and uninstallation procedures of anchoring system. The anchoring system (10) comprises:
- a floating platform (1) from which a plurality of first anchoring lines (11) emerge,
- at least one anchoring block (2) with at least three non-aligned anchoring points,
- a central float (3),
- a plurality of swinging arms (4), each swinging arm (4) being joined by means of an articulated joint (5) to an anchoring block (2), said articulated joint (5) being located in an intermediate area of the swinging arm (4) so that each swinging arm (4) comprises an internal section (6) and an external section (7) joined in the intermediate area of the swinging arm (4) corresponding to the articulated joint (5), the internal section (6) being located between the intermediate area of the swinging arm (4) and an inner free end and the outer section (7) being located between the intermediate area of the swinging arm (4) and an outer free end, the inner free end being closer to the central float (3) than the outer free end, so that the first anchoring lines (11) leaving the floating platform (1) are joined to the outer end containing the outer free end of the outer sections (7) of the swinging arms (4), and
- second anchoring lines (12) between the central float (3) and the inner end portions containing the inner free ends of the inner sections (6) of the swinging arms (4).

## Description

### Field of the Invention

The present invention relates to an anchoring system especially suitable for floating platforms that serve as a base for wind turbines located offshore. It also relates to a procedure for installing said anchoring system and a procedure for uninstalling said anchoring system.

### Background of the invention

Floating platforms, especially those dedicated to supporting wind turbines for the generation of electricity from offshore wind energy, need anchoring systems that keep them in position and contribute to their stability.

In the prior art, platforms of the type called TLP *(Tension Leg Platform)* are known. These platforms comprise three or more anchoring lines (usually chains or cables that link the platform with piles anchored to the seabed). The anchoring lines of the TLP platforms are designed to be arranged in tension, joining the platform vertically with each of the piles anchored to the seabed. TLP platforms comprise a set of floats designed to produce an excess of buoyancy of the platform (taking into account the weight of the structure that is set on the platform). This excess buoyancy guarantees a high level of tension in the cables, which in turn guarantees that they are always arranged in an upright position. In this way, pitch and roll movements of the platform and the structure that are set upon the platform are avoided.

EP 2743170 A1 discloses an example of TLP platform.

A drawback of TLP platforms is that the high tension of the cables necessary to keep them in a vertical position and thus avoid pitching and/or roll movements also produces a blockage of the displacements in the vertical direction of the platform. Thus, when the tide rises, the platform cannot move upwards (because the anchoring lines have reduced or no extensibility) and, therefore, the tension in the anchoring lines increases considerably. This causes a high risk of breakage of the anchoring lines and requires the availability of high section anchoring lines or an increase in the number of anchoring lines. Additionally, in TLP platforms, in situations of very low tide, the low platform and the anchoring lines can also become very loose, increasing the risk of the platform moving both vertically and laterally in an uncontrolled manner, and also increasing the risk of pitch and/or roll movements (due to the thrust of the wind and/or waves on the platform and the structure that is set upon it) that can cause the platform to tip over.

To avoid the aforementioned drawbacks, another type of floating platforms are known where the anchoring lines are connected with a counterweight through pulleys located on the platform. This type of platform allows the vertical and lateral displacement of the platform in the face of tides, waves and wind, thus making it unnecessary to have a large number of anchoring lines or anchoring lines with an elevated section. Document ES 2629867 A2 describes a platform of this type.

A drawback of platforms fitted with counterweight and pulleys such as those described above is that the anchoring lines (especially when it comes to anchoring cables) experience bending fatigue over time since, as they pass through the pulleys, the anchoring lines in tension bend and wear. This can cause, over time, the breakage of the anchoring lines.

### Summary of the invention

The object of the present invention is therefore to provide an anchoring system that allows the drawbacks of the prior art to be remedied.

The invention provides an anchoring system that comprises:
- a floating platform from which a plurality of first anchoring lines emerge,
- at least one anchorage block, with at least three non-aligned anchor points,
- a central float,
- a plurality of swinging arms, each swinging arm being joined by an articulated joint to an anchoring block, said articulated joint being located in an intermediate zone of the swinging arm so that each swinging arm comprises an inner section and an outer section joined in the intermediate zone of the swinging arm corresponding to the articulated joint, the inner section being located between the intermediate zone of the swinging arm and an inner free end and the outer section being located between the intermediate zone of the swinging arm and an outer free end, the inner free end being closer to the central float than the outer free end, so that the first anchoring lines leaving the floating platform are joined to the outer end part containing the outer free end of the outer sections of the swinging arms, and
- second anchoring lines between the central float and the inner end parts containing the inner free ends of the inner sections of the swinging arms.

The invention also provides a procedure for installing the anchoring system comprising the following steps:
- assembly of at least one anchoring block with the swinging arms, each swinging arm being joined by means of an articulated connection with a support to an anchoring block; fixing of the first anchoring lines to the outer end part that contains the outer free end of the external sections of the swinging arms; and joining the free end of the first anchoring lines with a respective buoy,
- fixing the second anchoring lines to the central float,
- placement of at least one anchoring block on the seabed, so that the first anchoring lines are deployed vertically hanging from the corresponding buoys,
- location of the floating platform with the wind turbine tower on the sea surface, vertically with respect to the position of at least one anchoring block,
- the buoys are released from the end of the first anchoring lines and said ends of the first anchoring lines are attached to the floating platform,
- the central float is placed next to the floating platform and the central float is hooked to a winch inside the wind turbine tower whose cables runs through a hole that runs through the centre of the floating platform,
- the central float is flooded, so that it descends and hangs from the winch, with the second anchoring lines hanging from the bottom of the central float,
- joining the second anchoring lines with the inner end parts containing the inner free ends of the inner sections of the swinging arms,
- the central float is emptied, the winch is disengaged from the central float and the winch is collected inside the wind turbine tower.

The invention also provides a method of uninstalling the anchoring system comprising the following steps:
- the winch is removed from the inside of the wind turbine tower, the winch is hooked to the central float, the central float is filled with water and the central float is lowered until all the first anchoring lines and the second anchoring lines are relaxed,
- separation of the second anchoring lines from the inner end portions containing the inner free ends of the inner sections of the swinging arms,
- the central float is raised with the winch to near the floating platform and the central float is emptied, with the second anchoring lines hanging from the bottom of the central float,
- the central float is disengaged from the winch, which is collected inside the wind turbine tower through a hole passing through the centre of the floating platform,
- the corresponding ends of the first anchoring lines are separated from the floating platform, and each of these free ends of the first anchoring lines are joined with a respective buoy,
- the floating platform is removed with the wind turbine tower that was located on the sea surface,
- at least one anchoring block is removed from the seabed with its swinging arms 4, raising it towards the sea surface, with the first anchoring lines 11 hanging from the corresponding buoys 15, and loaded onto a barge,
- the second anchoring lines of the central float are separated, holding them on the roof of the central float,
- separation of the free end of the first anchoring lines of their respective buoy, and separation of the first anchoring lines from the outer end part containing the outer free end of the outer sections of the swinging arms, and
- separation of at least one anchoring block from the swinging arms.

Through this configuration, an anchoring system is achieved that allows minimizing the pitch of the platform, since the second anchoring lines move synchronized by the movement of the central float, which makes the first anchoring lines also move in unison.

Likewise, the swinging arms eliminate the need for pulleys, thus avoiding the problem of bending fatigue of the ropes in the pulleys.

The described system therefore allows to use cables of much lower section than the anchoring cables used in the TLP platforms, and eliminates the risk of breakage of the cables due to the bending fatigue in the pulleys.

Other advantageous embodiments of the invention are outlined in the dependant claims.

### Brief Description of the Drawings

A non-limiting example of the object of the invention is shown below, with reference to the accompanying drawings wherein:
Figure 1a shows a perspective view of an embodiment of the anchoring system of the invention.
Figure 1b shows an enlarged detail of Figure 1a.
Figure 1c shows a plan view of the detail of Figure 1b.
Figure 2a shows a perspective view of another embodiment of the anchoring system of the invention.
Figure 2b shows an enlarged detail of Figure 2a.
Figure 2c shows a plan view of the detail of Figure 2b.
Figure 3a shows a perspective view of another embodiment of the anchoring system of the invention.
Figure 3b shows an enlarged detail of Figure 2a.
Figure 4a shows a perspective view of another embodiment of the anchoring system of the invention.
Figure 4b shows an enlarged detail of Figure 4a.
Figure 5a shows a perspective view of another embodiment of the anchoring system of the invention.
Figure 5b shows an enlarged detail of Figure 5a.
Figure 6 shows a schematic view of an anchoring system of the invention, in which the swinging arms have their outer section of the same length as their inner section.
Figure 7 shows a schematic view of an anchoring system of the invention, in which the swinging arms have their outer section longer than their inner section.
Figure 8 shows a schematic view of an anchoring system of the invention, in which the swinging arms have their outer section and their inner section inclined upwards.
Figure 9 shows a schematic view of the anchoring system of the invention of Figure 8, in which the floating platform has moved upwards.
Figure 10 shows a schematic view of the anchoring system of the invention of Figure 8, in which the floating platform has moved downwards.
Figure 11 shows a schematic view of the anchoring system of the invention of Figure 8, in which the floating platform has moved laterally.
Figure 12 shows several elements of the anchoring system, before its installation.
Figure 13 shows the transfer of the elements of Figure 12 on the deck of a barge.
Figure 14 shows the transfer of the floating platform from the anchoring system to the wind farm.
Figure 15 shows the connection of the first anchoring lines with the outer sections of the swinging arms.
Figure 16 shows the connection of the central float with the winch that is inside the wind farm tower.
Figure 17 shows the stage in which the central float is flooded and descends until it approaches the swinging arms.
Figure 18 shows the anchoring system of the invention once the installation procedure has been completed.

### Detailed description of the invention

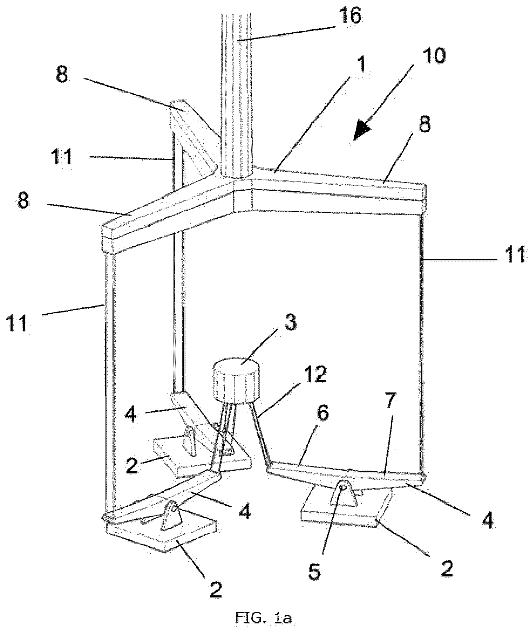

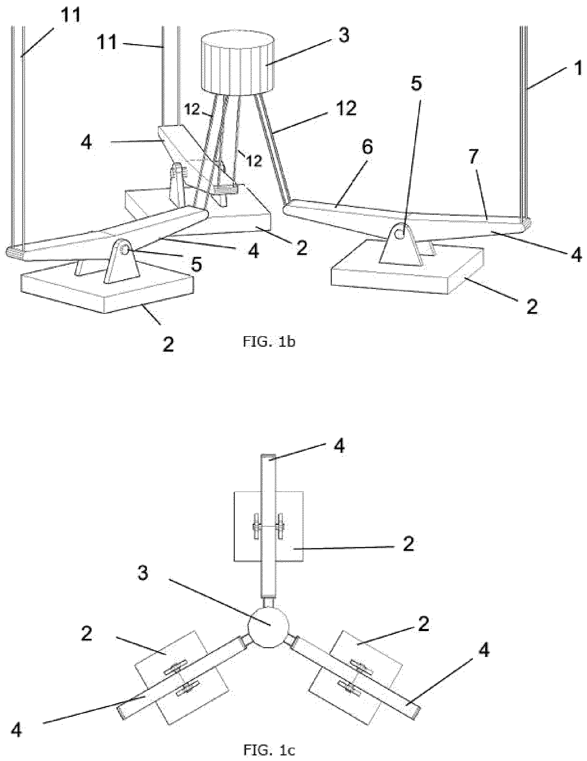

Figures 1a, 1b and 1c show an embodiment of an anchoring system 10 of the invention in operation, comprising the following elements:
- a floating platform 1 from which a plurality of first anchoring lines 11 emerge,
- several anchoring blocks 2, each with at least three non-aligned anchoring points,
- a central float 3,
- a plurality of swinging arms 4, so that each swinging arm 4 is joined by an articulated joint 5 to an anchoring block 2; said articulated joint 5 is located in an intermediate zone of the swinging arm 4 so that each swinging arm 4 comprises an internal section 6 and an external section 7 joined in the intermediate zone of the swinging arm 4 corresponding to the articulated joint 5; the internal section 6 is located between the intermediate zone of the swinging arm 4 and an internal free end, and the external section 7 is located between the intermediate zone of the swinging arm 4 and an external free end; the internal free end is closer to the central float 3 than the external free end, so that the first anchoring lines 11 that leave the floating platform 1 are joined to the external end that contains the external free end of the external sections 7 of the swinging arms 4; and
- second anchoring lines 12 between the central float 3 and the inner end portions containing the inner free ends of the inner sections 6 of the swinging arms 4.

The floating platform 1 supports the wind turbine tower 16, which is part of a wind farm.

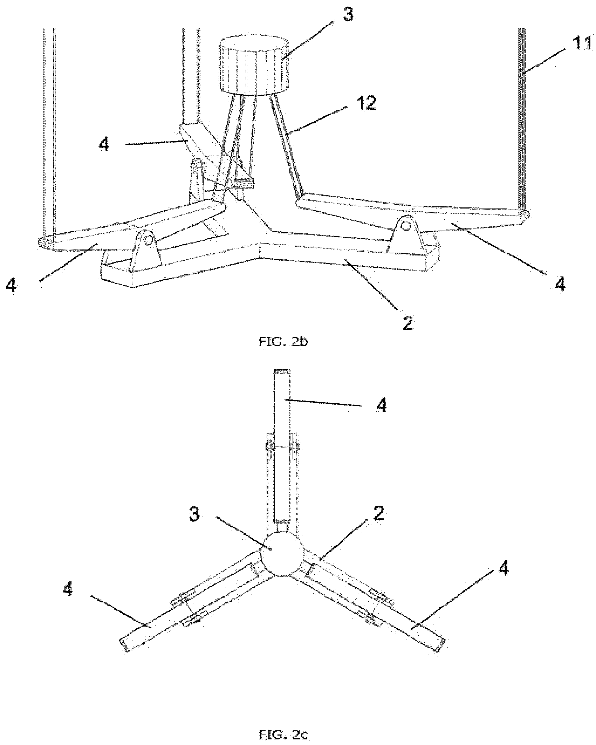

Likewise, each articulated joint 5 can be mounted on a support that is located on an anchoring block 2 (Figure 2b allows to better observe these supports).

The anchoring system of these Figures 1a, 1b and 1c has three independent anchoring blocks (2) to which the corresponding swinging arms (4) are attached.

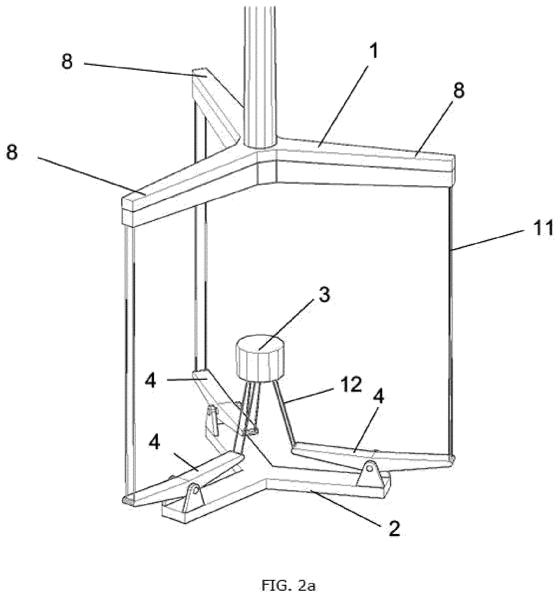

Figures 2a, 2b and 2c show another embodiment of an anchoring system of the invention in operation. This anchoring system has basically the same elements as the previous embodiment, but with a single anchoring block 2 to which the three swinging arms 4 are attached.

The anchoring blocks 2 have at least three non-aligned anchoring points, arranged in the shape of a triangle.

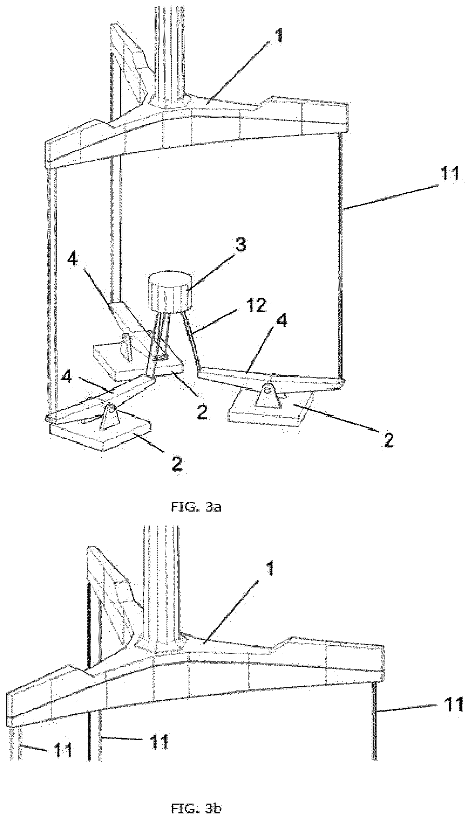

Figures 3a and 3b show an embodiment of an anchoring system of the invention, in which the floating platform 1 is star-shaped with a plurality of extension arms 8 (three extension arms, in this embodiment) radially arranged from the centre of the floating platform 1 to an outer free end of each extension arm 8. From each of the three extension arms 8 of the floating platform 1 there are first anchoring lines 11, which are joined to three swinging arms 4, which are also in a radial arrangement.

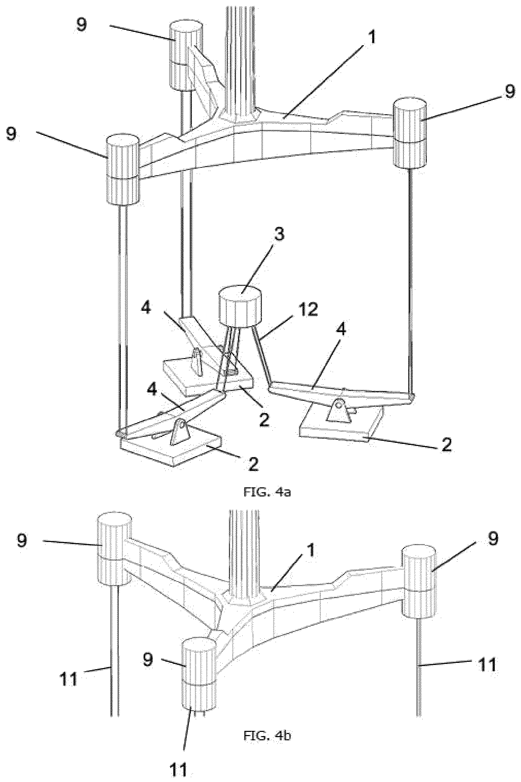

Figures 4a and 4b show another embodiment of an anchoring system of the invention, in which floats 9 are arranged at the free ends of the extension arms 8 of the floating platform 1. These floats can be slender and of vertical axis, and can protrude from the cover and the bottom of the extension arms 8, which improves the hydrodynamic behaviour of the anchoring system when there are very large waves.

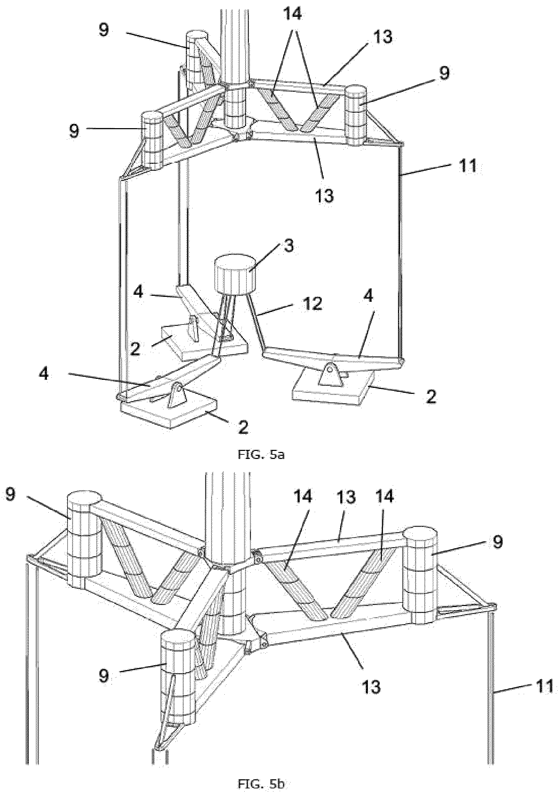

Figures 5a and 5b show another embodiment of an anchoring system of the invention, in which the extension arms consist of lattices with horizontal bars 13 and inclined bars 14, and with floats 9 at the free ends of the extension arms 8. This embodiment is more complex and expensive, but improves the hydrodynamics of the anchoring system.

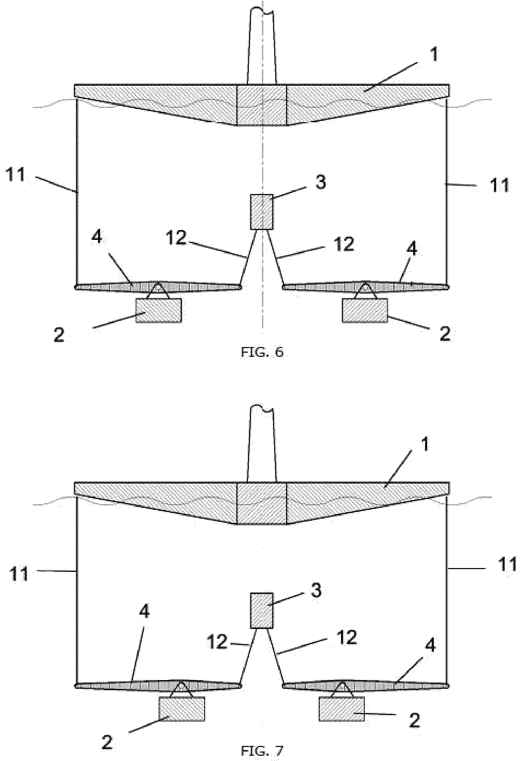

Figure 6 represents an embodiment of an anchoring system of the invention, in which the internal section 6 of each swinging arm 4 has the same length as the corresponding external section 7 of the corresponding swinging arm 4.

Figure 7 represents an embodiment of an anchoring system of the invention, in which the internal section 6 of each swinging arm 4 has a length less than the corresponding external section 7 of the corresponding swinging arm 4.

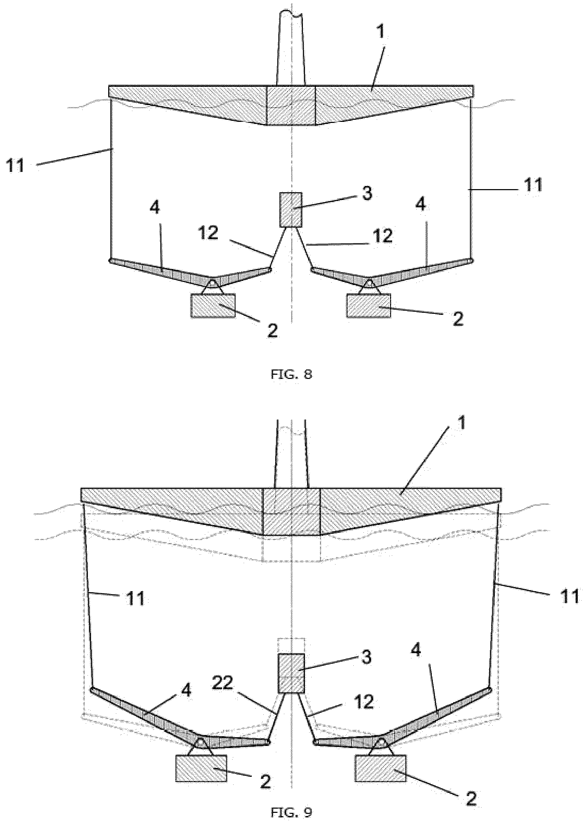

Figure 8 represents an embodiment of an anchoring system of the invention, in which the inner section 6 and the outer section 7 of each swinging arm 4 are not aligned. In the specific embodiment of said figure, the internal sections 6 and the external sections 7 of the swinging arms 4 have an upward inclination from the articulated joint 5, forming an angle of less than 180º between them. In this way the swinging arms 4 do not hit the seabed when turning.

Figures 9, 10 and 11 show different possibilities of movement of the floating platform 1 and, therefore, of the anchoring system 10 of the invention.

In Figure 9 the floating platform 1 moves upwards, which causes the first anchoring lines 11 to pull upwards the external sections 7 of the swinging arms 4, which rotate around the articulated joint 5, whereupon the internal sections 6 lower and the second anchoring lines 12 pull downwards the central float 3.

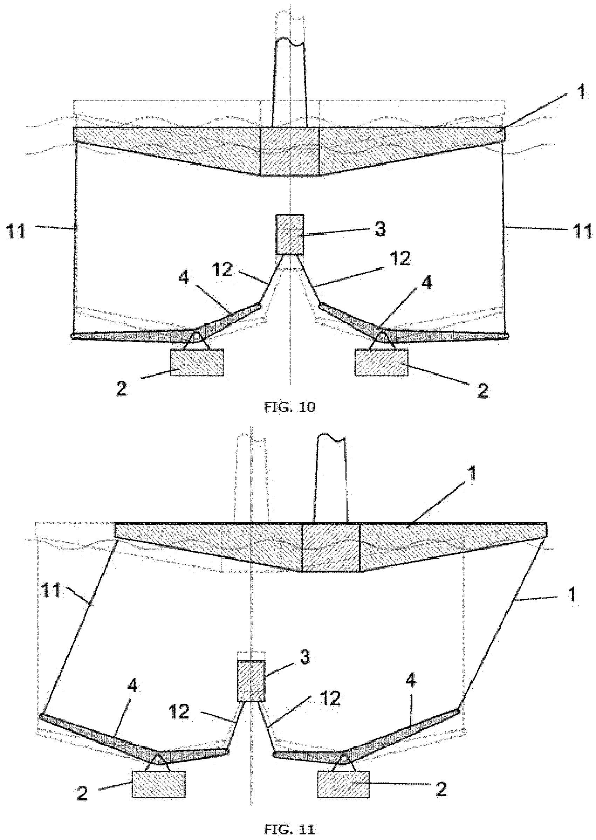

In Figure 10 the floating platform 1 moves downwards, which causes the first anchoring lines 11 to pull down the external sections 7 of the swinging arms 4, which rotate around the articulated joint 5, with which the internal sections 6 rise and the second anchoring lines 12 and the central float 3 also rise.

In Figure 11 the floating platform 1 moves laterally. This movement rotates the swinging arms 4 around the articulated joint 5, which produces the movement of the central float 3.

In Figures 9, 10 and 11 it is observed that the horizontal movement of the central float 3 practically disappears, while the vertical movement of the central float 3 becomes small.

The fact that the central float 3 has a reduced movement has beneficial effects on the mechanical wear of the elements that make up the anchoring system, and makes the central float 3 subject to small accelerations. In particular, vertical acceleration makes the float less effective, since part of the vertical thrust (which is what tensions the anchoring lines) is lost in compensating the inertial forces of the central float 3 itself. The lower the acceleration, the greater the effective stress in the anchoring lines and the more efficient the anchoring system when maintaining the right platform without inclination.

In the anchoring system of the invention, the movement of the central float 3 is half that of the platform. If the vertical accelerations of the floating platform 1 in waves becomes 3m/s², the vertical accelerations of the central float 3 are reduced to 1.5 m/s², i.e. it maintains much of its effectiveness even with the worst waves.

In the embodiment shown, for example, in Figures 3a and 3b, the floating platform 1 is star-shaped with three extension arms 8 in radial arrangement, three first anchoring lines 11 and three swinging arms 4. However, it is also possible to make anchoring systems with four extension arms 8 on the floating platform 1 from which there are four first anchoring lines 11 attached to four swinging arms 4 in a radial arrangement, or with five extension arms 8 on the floating platform 1 from which there are five first anchoring lines 11 attached to five swinging arms 4 in a radial arrangement (not shown in the figures). These anchoring systems are more complex and difficult to install, but they also provide more security.

Likewise, the first anchoring lines 11 and the second anchoring lines 12 may be anchoring chains or cables.

The installation procedure of the anchoring system of the invention comprises the steps described below.

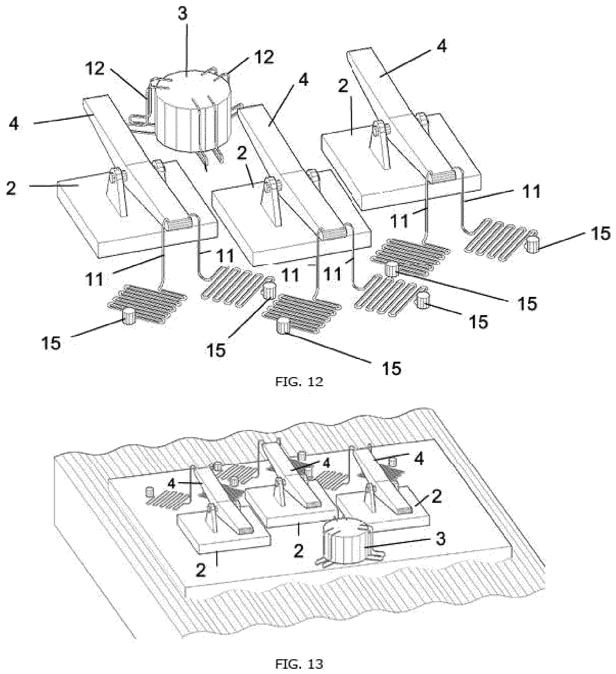

The anchoring blocks 2 are manufactured and the anchoring blocks 2 are assembled on the ground with the swinging arms 4, each swinging arm 2 being joined by means of an articulated joint 5 with a support to an anchoring block 2. Also included are the first anchoring lines 11 that will go to the floating platform 1 with a buoy 15 at the tip, whose buoyancy is able to support the full weight of the first anchoring lines 11 (Figure 12).

The central float 3 is built and the second anchoring lines 12 that will connect with the inner end of the swinging arms 4 of the anchoring blocks 2 are hooked, the second anchoring lines 12 are stowed (properly placed and fastened so that they do not move or fall during the trip) on the roof of the central float 3. The central float 3 will travel to the wind farm empty of internal ballast, that is, with a great buoyancy (Figure 13).

The anchor blocks 2 are loaded onto a barge and moved to the wind farm, to the position where the anchoring system is to be installed. There they are lifted with a crane (from the same barge or from an auxiliary vessel) and lowered to the seabed, to place them in their proper position, and with the swinging arms 4 radially oriented. The first anchoring lines 11 that will be connected to the floating platform 1 are vertical and reach the sea surface, hanging from the corresponding buoy 15 (the first anchoring lines 11 are a little longer than the sea depth at the point of installation).

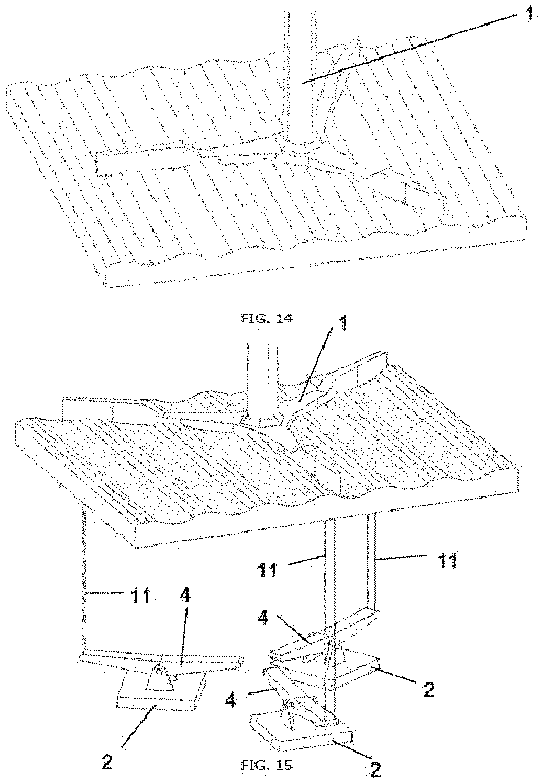

Floating platform 1 (floating by itself) is moved to the wind farm (Figure 14).

The first anchoring lines 11 are connected to fixed points of the floating platform 1 and the buoyancy buoys 15 are eliminated (they are auxiliary installation elements) (Figure 15).

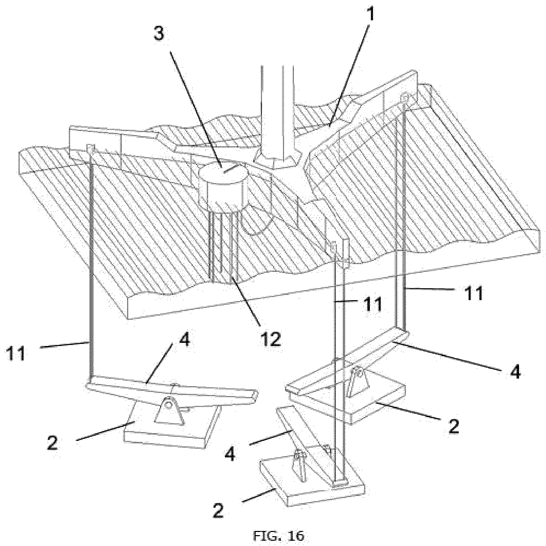

The central float 3 is placed near the floating platform 1 and is hung from a strand jack winch (it is a special type of hydraulic jack that drags lifting cables) that is inside the tower 16 of the wind turbine, whose cables pass through a hole in the centre of the floating platform 1 (Figure 16).

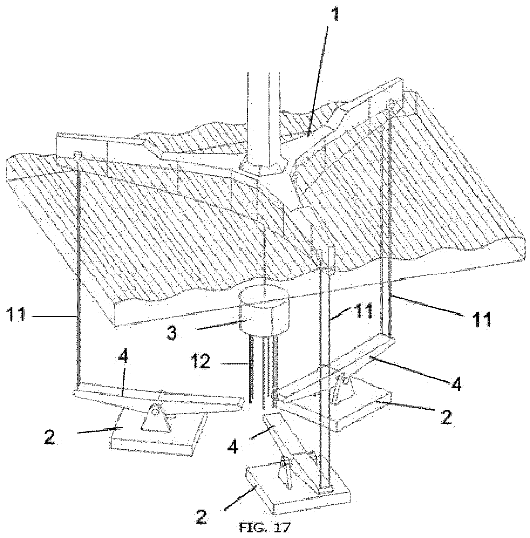

The central float 3 (left hanging from the winch) is flooded, with the second anchoring lines 12 hanging from the bottom of the central float 3 and lowered to near the seabed (until the free end of the second anchoring lines 12 is near the swinging arms 4 of the anchor blocks 2 (Figure 17).

The second anchoring lines 12 are connected to the inner end portions containing the inner free ends of the inner sections 6 of the swinging arms 4 of the anchoring blocks 2. This can be done with the help of an ROV (remotely operated vehicle, that is, an underwater robot).

The central float 3 is emptied of ballast (with compressed air or with ballast pumps that discharge the interior water, to the surface of the sea) until it is completely empty, providing all the buoyancy that this element needs.

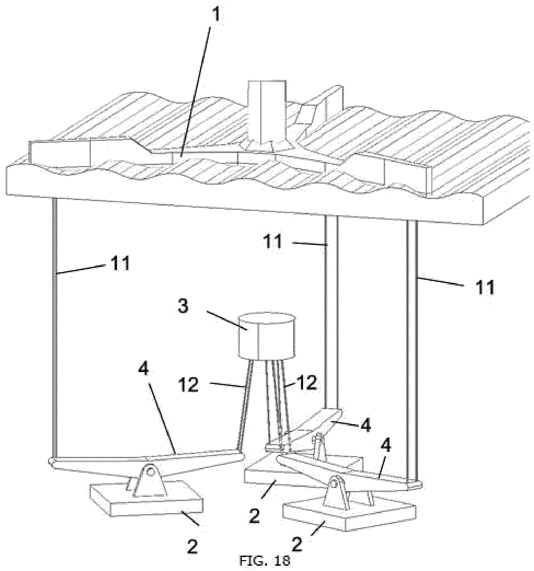

The winch cable is unhooked and collected inside the wind turbine tower 16. This cable will be used again when the central float 3 has to be disconnected (for some repair, or to disassemble the anchoring system) (Figure 18).

The umbilical cable (the one connecting the generator to the ground mains) is connected, so that the wind turbine is ready to generate energy.

The procedure for uninstalling the anchoring system 10 has the same steps as the procedure for installing the anchoring system 10, but with the time sequence reversed.

In particular, these would be the steps of the uninstallation procedure of the anchoring system 10 of the invention:
- the winch is removed from inside the tower 16 of the wind turbine, the winch is hooked to the central float 3, the central float 3 is filled with water and the central float 3 is lowered until all its buoyancy is lost, so that all the first anchoring lines 11 and the second anchoring lines 12 are relaxed,
- separation of the second anchoring lines 12 from the inner end portions containing the inner free ends of the inner sections 6 of the swinging arms 4,
- the central float 3 is raised with the winch to near the floating platform 1 and the central float 3 is emptied, with the second anchoring lines 12 hanging from the bottom of the central float 3,
- the central float 3 (which now floats by itself) is disengaged from the winch, which is collected inside the tower 16 of the wind turbine through a hole that passes through the centre of the floating platform 1,
- the corresponding ends of the first anchoring lines 11 are separated from the floating platform 1, and each of these free ends of the first anchoring lines 11 is joined with a respective buoy 15,
- the floating platform 1 is removed with the wind turbine tower 16 that was located on the sea surface,
- at least one anchoring block 2 is removed from the seabed with its swinging arms 4, raising it towards the sea surface, with the first anchoring lines 11 hanging from the corresponding buoys 15, and loaded onto a barge,
- the second anchoring lines 12 of the central float 3 are separated, holding them on the roof of the central float 3,
- separation of the free end of the first anchoring lines 11 from their respective buoy 15, and separation of the first anchoring lines 11 from the outer end part containing the outer free end of the outer sections 7 of the swinging arms 4, and
- separation of at least one anchoring block 2 from the swinging arms 4.

Although some embodiments of the invention have been described and represented, it is clear that modifications may be introduced to them within the scope of the same, and that the invention should not be considered limited to these embodiments, but only to the content of the following claims.

## Claims

1. An anchoring system (10) comprising:
- a floating platform (1) from which a plurality of first anchoring lines (11) emerge,
- at least one anchoring block (2) with at least three non-aligned anchoring points, and
- a central float (3),
**characterized by** further comprising:
- a plurality of swinging arms (4), each swinging arm (4) being joined by means of an articulated joint (5) to an anchoring block (2), said articulated joint (5) being located in an intermediate area of the swinging arm (4) so that each swinging arm (4) comprises an internal section (6) and an external section (7) joined in the intermediate area of the swinging arm (4) corresponding to the articulated joint (5), the internal section (6) being located between the intermediate area of the swinging arm (4) and an inner free end and the outer section (7) being located between the intermediate area of the swinging arm (4) and an outer free end, the inner free end being closer to the central float (3) than the outer free end, so that the first anchoring lines (11) leaving the floating platform (1) are joined to the outer end containing the outer free end of the outer sections (7) of the swinging arms (4), and
- second anchoring lines (12) between the central float (3) and the inner end portions containing the inner free ends of the inner sections (6) of the swinging arms (4).

2. An anchoring system according to claim 1, wherein the internal section (6) of each swinging arm (4) has the same length as the corresponding external section (7) of the corresponding swinging arm (4).

3. An anchoring system according to claim 1, wherein the internal section (6) of each swinging arm (4) has a length less than the corresponding external section (7) of the corresponding swinging arm (4).

4. An anchoring system, according to any of the preceding claims, wherein the internal section (6) and the external section (7) of each swinging arm (4) are not aligned.

5. An anchoring system, according to any of the preceding claims, wherein the floating platform (1) is star-shaped with a plurality of extension arms (8) radially arranged from the centre of the floating platform (1) to an outer free end of each extension arm (8).

6. An anchoring system according to claim 5, comprising three extension arms (8) on the floating platform (1) from which three first anchoring lines (11) emerge, joined to three swinging arms (4) in a radial arrangement.

7. An anchoring system according to claim 5, comprising four extension arms (8) on the floating platform (1) from which four first anchoring lines (11) emerge, joined to four swinging arms (4) in a radial arrangement.

8. An anchoring system according to claim 5, comprising five extension arms (8) on the floating platform (1) from which five first anchoring lines (11) emerge, joined to five swinging arms (4) in a radial arrangement.

9. An anchoring system, according to any of the preceding claims, further comprising floats (9) at the free ends of the extension arms (8) of the floating platform (1).

10. An anchoring system according to claim 7, wherein the extension arms consist of lattices with horizontal bars (13) and inclined bars (14).

11. An anchoring system, according to any of the preceding claims, comprising a single anchoring block (2) to which the swinging arms (4) are attached at a plurality of non-aligned points.

12. An anchoring system, according to any of claims 1 to 8, comprising at least three anchoring blocks (2) to which the corresponding swinging arms (4) are attached.

13. An anchoring system according to any of the preceding claims, wherein the first anchoring lines (11) and the second anchoring lines (12) are anchoring chains or cables.

14. An anchoring system according to any of the preceding claims, wherein the connection of each swinging arm 4 with an anchoring block 2 is made by means of an articulated connection 5 with a support.

15. A procedure for installing the anchoring system of the previous claims, comprising the following steps:
- assembly of at least one anchoring block (2) with the swinging arms (4), each swinging arm (4) being joined by means of an articulated joint (5) with a support to an anchoring block (2); fixing the first anchoring lines (11) to the outer end part containing the outer free end of the outer sections (7) of the swinging arms (4); and joining the free end of the first anchoring lines (11) with a respective buoy (15),
- fixing the second anchoring lines (12) to the central float (3),
- placement of at least one anchoring block (2) on the seabed, so that the first anchoring lines (11) are deployed vertically hanging from the corresponding buoys (15),
- location of the floating platform (1) with the wind turbine tower (16) on the sea surface, vertically with respect to the position of at least one anchoring block (2),
- the buoys (15) are released and removed from the end of the first anchoring lines (11) and said ends of the first anchoring lines (11) are joined to the floating platform (1),
- the central float (3) is placed next to the floating platform (1) and the central float (3) is hooked to a winch inside the tower (16) of the wind turbine whose cables pass through a hole that passes through the centre of the floating platform (1),
- the central float (3) is flooded, so that it descends and hangs from the winch, with the second anchoring lines (12) hanging from the bottom of the central float (3),
- joining the second anchoring lines (12) with the inner end portions containing the inner free ends of the inner sections (6) of the swinging arms (4), and
- the central float (3) is emptied, the winch is disengaged from the central float (3) and the winch is collected inside the tower (16) of the wind turbine.

16. A procedure for uninstalling the anchoring system of the previous claims, comprising the following steps:
- remove the winch from the inside of the wind turbine tower (16), the winch is hooked to the central float (3), the central float (3) is filled with water and the central float (3) is lowered until all the first anchoring lines (11) and the second anchoring lines (12) are relaxed,
- separation of the second anchoring lines (12) from the inner end parts containing the inner free ends of the inner sections (6) of the swinging arms (4),
- the central float 3 is raised with the winch to near the floating platform 1 and the central float (3) is emptied, so that it rises and is located next to the floating platform (1), with the second anchoring lines (12) hanging from the bottom of the central float (3),
- the central float (3) is disengaged from the winch, which is collected inside the tower (16) of the wind turbine through a hole that passes through the centre of the floating platform (1),
- the corresponding ends of the first anchoring lines (11) are separated with respect to the floating platform (1), and each of these free ends of the first anchoring lines (11) are joined with a respective buoy (15),
- the floating platform (1) is removed with the tower (16) of the wind turbine that was located on the marine surface,
- at least one anchoring block (2) is removed with its swinging arms (4) from the seabed, raising it towards the sea surface, with the first anchoring lines (11) hanging from the corresponding buoys (15), and is loaded on a barge,
- the second anchoring lines (12) of the central float (3) are separated, holding them on the roof of the central float (3),
- separation of the free end of the first anchoring lines (11) from their respective buoy (15), and separation of the first anchoring lines (11) from the outer end part containing the outer free end of the outer sections (7) of the swinging arms (4), and
- separation of at least one anchoring block (2) from the swinging arms (4).
